**Europäisches Patentamt**

**European Patent Office**

**Office européen des brevets**

(19)

(11) Veröffentlichungsnummer : **0 391 017 B1**

## (12) EUROPÄISCHE PATENTSCHRIFT

(45) Veröffentlichungstag der Patentschrift :
**04.11.92 Patentblatt 92/45**

(51) Int. Cl.$^5$ : **A21C 7/01**

(21) Anmeldenummer : **89890099.8**

(22) Anmeldetag : **07.04.89**

(54) **Maschine zum Rundwirken von Teigstücken.**

(43) Veröffentlichungstag der Anmeldung :
**10.10.90 Patentblatt 90/41**

(45) Bekanntmachung des Hinweises auf die
Patenterteilung :
**04.11.92 Patentblatt 92/45**

(84) Benannte Vertragsstaaten :
**DE GB NL**

(56) Entgegenhaltungen :
**AT-B- 363 411**
**DE-A- 2 052 242**
**DE-A- 2 163 103**
**NL-A- 7 610 713**

(73) Patentinhaber : **KÖNIG, Helmut**
**Statteggerstrasse 80**
**A-8045 Graz (AT)**

(72) Erfinder : **Rauch, Eduard**
**Nr. 29**
**A-8321 St. Margarethen/Raab (AT)**
Erfinder : **König, Helmut, Dipl.-Ing**
**Ursprungweg 70-72**
**A-8045 Graz (AT)**

(74) Vertreter : **Brauneiss, Leo et al**
**Patentanwälte Dipl.-Ing. Leo Brauneiss,**
**Dipl.-Ing. Dr. Helmut Wildhack Landstrasser**
**Hauptstrasse 50 Postfach 281**
**A-1031 Wien (AT)**

**Beschreibung**

Die Erfindung bezieht sich auf eine Maschine zum Rundwirken von Teigstücken, mit einer in einem Gestell gelagerten, mit Aufnahmeöffnungen für die zu wirkenden Teigstücke versehenen Außentrommel, in der eine Innentrommel angeordnet ist, die an ihrem Außenmantel den Aufnahmeöffnungen zugeordnete Vertiefungen trägt und durch einen Antrieb zu einer Kreisbewegung relativ zur Außentrommel angetrieben ist, wobei beide Trommeln zu einer Drehbewegung um ihre horizontalen Achsen angetrieben sind und die Teigstücke durch eine zumindest einen unteren Umfangsbereich der Außentrommel begleitende Abstützung am Herausfallen aus den Aufnahmeöffnungen verhindert sind, welche Abstützung ein endloses Band aufweist, das mit einer der Umfangsgeschwindigkeit der Außentrommel gleichen Geschwindigkeit umläuft und durch verstellbare Führungen des Gestelles zumindest über einen Teil des erwähnten Umfangsbereiches in einstellbarem Abstand vom Umfang der Außentrommel geführt ist.

Derartige Maschinen sind bekannt (AT-B-363 411). Bei der bekannten Konstruktion ist die Abstützung von einer Walzenreihe gebildet, über welche ein Tuch locker gelegt ist. Die gesamte Walzenreihe ist in seitlichen Wangen gehaltert, die in Bezug auf die Trommel verstellbar sind. Damit läßt sich der Spalt zwischen der Außentrommel und dem über die Walzenreihe gelegten Tuch verstellen, so daß verschiedenen Teigstückgrößen Rechnung getragen bzw. die Verhältnisse an der Ablegestelle der fertiggewirkten Teigstücke verändert werden können.

Eine andere bekannte Maschine (DE-A-3 526 947) erreicht eine stufenlos verstellbare Wirkraumhöhe dadurch, daß in Nuten am Mantel der Außentrommel feststehende Exzenterringe eingebettet sind, welche eine von einem endlosen Band gebildete Wirkunterlage in Abstand vom Außenmantel der Außentrommel halten. Durch Verstellung der Winkellage der Exzenterringe läßt sich der erwähnte Abstand zwischen Wirkunterlage und Trommelmantel verändern, jedoch stets nur gleichsinnig über den gesamten Wirkbereich von der Eingabestelle der Teigstücke bis zur Ablagestelle derselben. Außerdem ist der Aufwand groß und die Reinigung der die Exzenterringe aufnehmenden Ringnuten am Trommelmantel problematisch.

Die Erfindung setzt sich zur Aufgabe, diese Nachteile zu vermeiden und eine Maschine der eingangs geschilderten Art so zu verbessern, daß diese Nachteile vermieden sind und mit einfachen Mitteln eine Führung des Bandes mit jedwedem gewünschten Verlauf, auch im Bereich des Einlaufes des Bandes erzielt wird, d.h. in jenem Bereich, welcher an die Eingebestelle der Teigstücke anschließt, um so die Wirkergebnisse zu verbessern. Die Erfindung löst diese Aufgabe dadurch, daß die Führungen von Gleitbahnen gebildet sind, welche nur an den beiden Seitenrändern des Bandes angreifen, wobei die Gleitbahnen das Band auf dessen der Außentrommel zugewandten Seite begleiten und dadurch das Band in Abstand von der Außentrommel halten und wobei zumindest in jenem Bereich, in welchem der Wirkvorgang des Teigstückes schon weit fortgeschritten ist, an der Außenseite des Bandes eine Unterlage in Form eines gebogenen Bleches angeordnet ist, die eine Stütze für das Band bildet. Mit dieser Bandführung des Bandes werden die durch die in den Trommelmantel eingebetteten Ringe hervorgerufenen Schwierigkeiten vermieden und es kann die Gestalt dieser Führungen dem jeweils gewünschten Verlauf des Bandes angepaßt werden. Hiefür eignet sich gemäß einer bevorzugten Ausführungsform der Erfindung ein quersteifes Band besonders, da ein solches Band Aus- bzw. Einbuchtungen in Trommelachsrichtung vermeidet.

Es ist dadurch möglich, dem Spalt zwischen der Außenfläche der Außentrommel und dem endlosen umlaufenden Band jede gewünschte Gestalt zu geben, auch eine solche Gestalt, bei welcher das Band am Beginn des Schleifvorganges eng an der Trommel anliegt und dadurch das Teigstück gut zum Anschleifen bringt, wobei dieser Spalt jedoch im Laufe des Überganges des Teigstückes in die kugelige Form zunehmend vergrößert wird, dann eine zeitlang konstant bleibt und erst im Ablegebereich der Teigstücke neuerlich vergrößert wird. derartige Spaltformen lassen sich mit der bekannten Konstruktion mit in den Trommelmantel eingebetteten Ringen nicht und mit der eingangs geschilderten, eine Walzenkette aufweisenden Konstruktion nur schwer erzielen. Beim Erfindungsgegenstand bildet ferner das gebogene Blech eine Unterlage für das Band, welche den bei der Durchführung des Wirkvorganges ausgeübten Druck aufnimmt.

Aus der DE-A-2 052 242 ist es für ein gattungsfremdes Anwendungsgebiet, nämlich für die Beförderung von Personen oder Lasten, bekannt, ein quersteifes Förderband über Führungsrollen zu führen, welche Umfangsnuten aufweisen, in die Verdickungen der Ränder des Förderbandes eingreifen, so daß das Band, gegebenenfalls im abstand vom Mantel der betreffenden Führungsrolle, gegen Abrutschen von dieser gehalten ist. Eine Bandführung im Sinne der Erfindung läßt sich damit nicht erreichen.

Gemäß einer bevorzugten Ausführungsform der Erfindung sind die Führungen von Blechstreifen gebildet, welche die Seitenränder des Bandes an dessen der Außentrommel zugewendeten Seite übergreifen. Solche Gleitbahnen lassen sich sehr dünn ausbilden, so daß der Anstand des Bandes vom Trommelaußenmantel praktisch auf den Wert Null verkleinert werden kann. Wenn das Band breiter ist als die in Achsrichtung gemessene Trommelbreite, dann können die Führungen auch außerhalb der Trommel angeordnet werden, so daß das Band unmittelbar am Trommelmantel anliegen kann, vorzugsweise im Einlaufbereich des Bandes.

Gemäß einer bevorzugten Ausführungsform der Erfindung ist jede Gleitbahn in Umlaufrichtung des Bandes in zumindest zwei Abschnitte unterteilt, wobei die einzelnen Abschnitte relativ zueinander verstellbar sind. Dies ermöglicht eine abschnittweise Verstellung des Bandlaufes und damit des Abstandes des Bandes vom Trommelaußenmantel im entsprechenden Abschnitt, wobei die einzelnen Abschnitte voneinander unabhängig sind. Zweckmäßig ist hiebei im Rahmen der Erfindung die Konstruktion so getroffen, daß die einzelnen Abschnitte der Gleitbahnen an Wangen befestigt sind, die mittels Schlitzführungen auf die Außentrommel zustellbar bzw. von dieser entfernbar sind. Auf diese Weise ist eine kontrollierte Verstellung der Spaltbreite mit geringem Aufwand und verläßlich möglich. Hiebei kann die Anordnung so getroffen sein, daß zwei Abschnitte der Gleitbahn an ihren einander zugewendeten Enden durch ein Gelenk mit horizontaler Achse miteinander verbunden und um diese Achse voneinander unabhängig schwenkbar gelagert sind. Diese Achse kann, jedoch muß nicht, ortsfest sein, sie kann vielmehr in ihrer Lage einstellbar sein.

Gemäß einer bevorzugten Ausführungsform der Erfindung sind auch im Einlaufbereich des Bandes seitliche Führungen für das Band vorgesehen, mit denen der Abstand des Bandes von der Außentrommel in diesem Bereich verstellbar ist. Dadurch läßt sich eine Anpassung des Schleifdruckes in der Anschleifphase an verschiedene Teigstückgrößen erzielen. Dieser variable Abstand in der Anschleifphase ist auch vorteilhaft, um die Maschine an verschiedene Teigarten anpassen zu können.

Quersteife Bänder sind handelsüblich, so daß auf Sonderanfertigungen verzichtet werden kann. Zweckmäßig besteht das Band aus lebensmittelechtem Kunststoff, vorzugsweise Polyamid, gegebenenfalls mit einer Baumwollbeschichtung. Selbstverständlich muß das Band trotz seiner Quersteifigkeit genügend flexibel sein, um es über die Umlenkrollen führen zu können.

In der Regel reicht die Quersteifigkeit des Bandes aus, um genügend Widerstand beim Schleifvorgang zu bieten. Wo dieser Widerstand nicht ausreicht, kann das Band im Rahmen der Erfindung vorzugsweise außerhalb des Wirkbereiches, zwischen den seitlichen Führungen durch eine an seiner der Außentrommel abgewendeten Außenseite anliegende Unterlage, z.B. ein gebogenes Blech, abgestützt sein. Dieses Blech kann auch dazu dienen, die beiden seitlichen, die Führungen tragenden Wangen miteinander zu verbinden, so daß eine völlig gleichmäßige Verstellung der beiderseitigen Wangen gesichert wird.

Um einen seitlichen Ablauf des Bandes von den Führungen bzw. ein Klemmen des Bandes in denselben zu vermeiden, kann erfindungsgemäß das Band an seinen Seitenrändern Verdickungen, vorzugsweise mit Keilquerschnitt, aufweisen, mit denen es in in Laufrichtung des Bandes verlaufenden Nuten der Führungen gehalten ist.

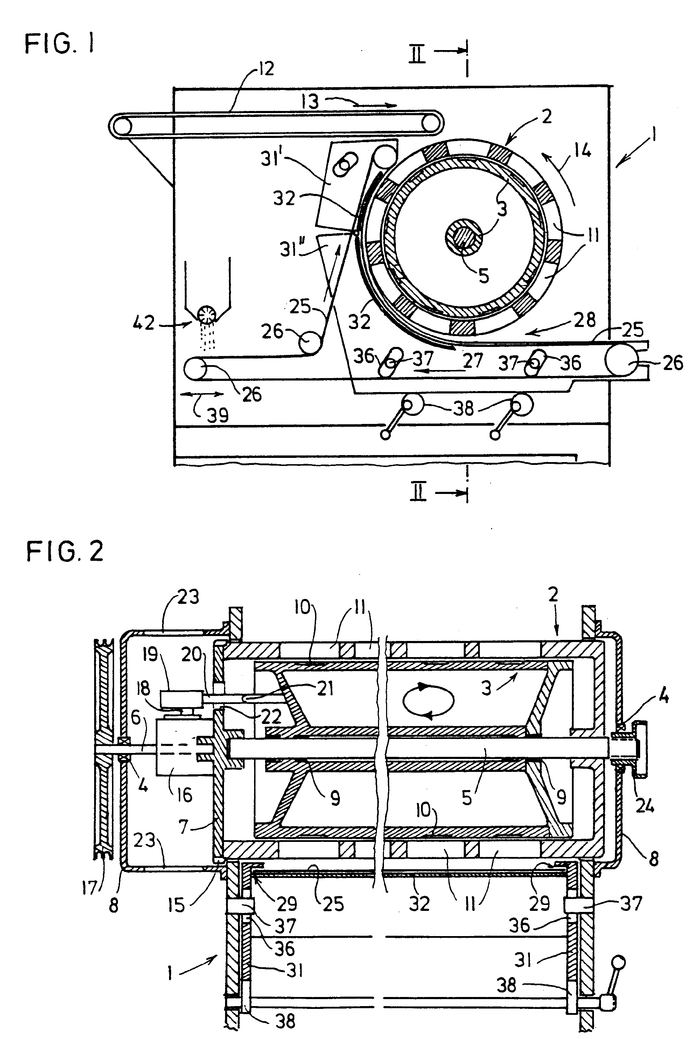

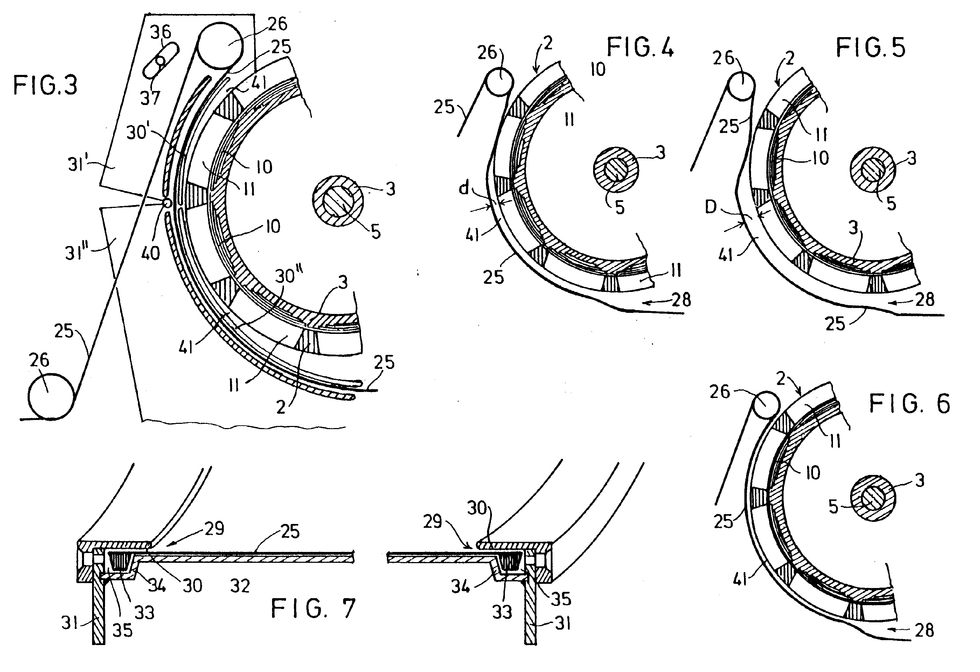

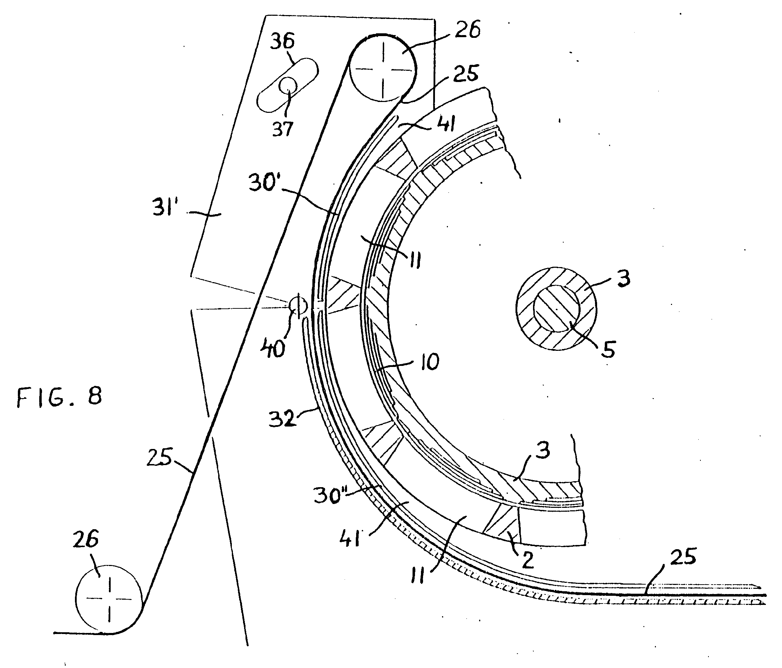

In der Zeichnung sind Ausführungsbeispiele des Erfindungsgegenstandes schematisch dargestellt. Fig.1 zeigt einen Vertikalschnitt durch die Maschine normal zur Trommelachse. Fig.2 zeigt einen Schnitt nach der Linie II-II der Fig.1. Fig.3 zeigt die Bandführung im Detail. Die Fig.4,5 und 6 zeigen drei verschiedene Varianten des zwischen dem Band und dem Trommelaußenmantel befindlichen Spaltes. Fig.7 zeigt die seitlichen Führungen für das Band im Detail. Fig.8 zeigt eine Variante für die Außenabstützung des Bandes.

Die Maschine nach den Fig .1 und 2 hat ein Gestell 1, in welchem eine Außentrommel 2 und eine Innentrommel 3 koaxial zueinander drehbar gelagert sind. Hiezu dienen Lager 4 für eine zweigeteilte Welle 5,6, deren beide Abschnitte in einen seitlichen Schild 7 der Außentrommel 2 eingesteckt sind. Die Lager 4 sind von seitlichen Ansätzen 8 des Gestelles 1 getragen. Auf den Wellenabschnitt 5 sind mittels Gleitlagern 9 zwei Naben der Innentrommel 3 aufgesetzt, die an ihrem Außenumfang stufenförmig abgesetzte Vertiefungen 10 (Fig.3) hat, die Mitnahmenuten für die zu wirkenden Teigstücke bilden. Die die Innentrommel 3 umgebende Außentrommel 2 hat eine der Anzahl der Vertiefungen 10 gleiche Anzahl von Aufnahmeöffnungen 11 für die zu wirkenden Teigstücke, welche durch ein endloses Förderband 12, das sich in Richtung des Pfeiles 13 (Fig.1) bewegt, zugeführt und in die Aufnahmeöffnungen eingeworfen werden. Auf dieses Förderband 12 werden die Teigstücke von einer nicht dargestellten Portioniervorrichtung aufgelegt. Die Aufnahmeöffnungen 11 sind in Reihen an der Außentrommel 2 angeordnet, im dargestellten Ausführungsbeispiel in neun Reihen zu je sechs Öffnungen. Die Außentrommel 2 läuft in Richtung des Pfeiles 14 (Fig.1) kontinuierlich um. Der Antrieb hiefür erfolgt über einen Zahnkranz 15, der am Außenumfang des Schildes 7 angeordnet ist. An der Außenseite dieses Schildes ist ein Lagergehäuse 16 angeschraubt, in welchem ein Kegelradgetriebe gelagert ist, dessen Antriebswelle vom Wellenabschnitt 6 gebildet ist, auf dessen Ende eine Keilriemenscheibe 17 aufgekeilt ist, die von einem nicht dargestellten Getriebemotor aus über einen Keilriemen angetrieben wird. Die Abtriebswelle 18 des im Lagergehäuse 16 befindlichen Kegelradgetriebes trägt außerhalb dieses Gehäuses eine Exzenterscheibe 19 mit verstellbarer Exzentrizität, die mit einem Übertragungshebel 20 verbunden ist, der mittels eines zur Aufnahme von Radial- und Axialkräften geeigneten Gelenklagers 21 mit der Innentrommel 3 gelenkig verbunden ist. Der Übertragungshebel 20 durchsetzt eine Öffnung 22 des Schildes 7. Durch die beschriebene Verbindung wird einerseits die Innentrommel 3 zur Drehbewegung um die Achse 5,6 mitgenommen, wenn die über den Zahnkranz 15 angetriebene Außentrommel 2 samt dem an ihr befestigten Lagergehäuses 16 um die Welle 5,6 umläuft. Hiebei drehen sich um den Wellenabschnitt 5, welcher auch feststehend ausgebildet sein kann, zugleich mit der Außentrommel 2 und der Innentrommel 3 das Lagergehäuse 16 samt dem in ihm angeordneten Kegelradgetriebe und der Exzenterantrieb 18,19 sowie der Übertragungshebel 20 mit. Anderseits wird über den Exzenterantrieb 18,19 und den Übertragungshebel 20 der Innentrommel 3 gegenüber der Außentrommel 2 eine Kreisbewegung erteilt, so daß die Vertiefungen 10 eine kreisende Bewegung relativ zu den ihnen zugeordneten Aufnahmeöffnungen 11 vollführen. Dadurch werden die in den Aufnahmeöffnungen 11 liegenden Teigstücke gewirkt bzw. geschliffen, d.h. in eine annähernd kugelartige Form übergeführt. Um die Exzentrizität des Exzenterantriebes 18,19 verstellen zu können, sind im Ansatz 8 zwei Öffnungen 23 vorgesehen, durch welche zwecks Betätigung eines nicht dargestellten Verstellmechanismus hindurchgegriffen werden kann.

Die Außentrommel 2 und die Innentrommel 3 sind zwecks Reinigung aus dem Gestell 1 ausbaubar. Hiezu ist auf das Ende des Wellenabschnittes 5 eine Verschlußschraube 24 aufgeschraubt, nach deren Lösung der am Gestell festgeschraubte Ansatz 8 abgenommen und sodann die Außentrommel 2 und gegebenenfalls auch die Innentrommel 3 (nach Lösung des Antriebes für das im Lagergehäuse 16 befindliche Kegelradgetriebe) ausgebaut werden können.

Um zu verhindern, daß die Teigstücke aus den Aufnahmeöffnungen 11 ungewollt herausfallen können, ist ein endloses Band 25 vorgesehen, welches über Umlenkrollen 26 geführt ist und in Richtung des Pfeiles 27 mit einer der Umfangsgeschwindigkeit der Außentrommel 2 gleichen Geschwindigkeit umläuft. Dieses Band 25 begleitet also die über das Förderband 12 in die Aufnahmeöffnungen 11 eingebrachten Teigstücke während des Wirkvorganges und dient zugleich als Ablageband, auf welches die Teigstücke nach Durchführung des Wirkvorganges aus den Aufnahmeöffnungen 11 an der Ablagestelle 28 (Fig.1) abgelegt werden. Dieses Band 25 ist von einem lebensmittelechten Kunststoffband aus Polyäthylen od.dgl. gebildet, ist quersteif mit einer Dicke von etwa 2 bis 3 mm ausgebildet, und im Bereich der Außentrommel 2 von die Seitenränder des Bandes 25 führenden Führungen 29 geführt. Diese Führungen haben Gleitbahnen 30 (Fig.7), die das Band 25 nur an den Seitenrändern an der der Außentrommel 2 zugewandten Seite übergreifen und das Band 25 völlig unabhängig von den Trommeln 2,3 führen, wobei im zwischen den Bandseitenrändern liegenden Mittenbereich des Bandes 25 keinerlei Führung für dasselbe an seiner der Außentrommel 2 zugewendeten Seite anliegt, außer gegebenenfalls die Außentrommel 2 selbst.

Zweckmäßig sind diese Gleitbahnen 30 von Blechstreifen gebildet, die an seitlichen Wangen 31 angeschraubt sind, wobei die beiden seitlichen Wangen 31 durch ein angeschweißtes Verbindungsblech untereinander verbunden sind. Dieses Verbindungsblech bildet zugleich eine Unterlage 32 (Fig.1,2,7) für das Band 25, welche den bei der Durchführung des Wirkvorganges ausgeübten Druck aufnimmt und eine Ausbuchtung des Bandes 25 nach außen verhindert. Um einen sicheren Lauf des Bandes 25 zu gewährleisten, hat dieses an seinen Seitenrändern Verdickungen 33 (Fig.7) mit Keilquerschnitt, welche in von Abkröpfungen 34 der Unterlage 32 gebildeten Längsnuten 35 laufen. Durch diese Verdickungen 33 wird auch zusammen mit der Quersteifigkeit des Bandes 25 verhindert, daß das Band gegen die Außentrommel 2 durchhängen oder sich ausbeulen kann.

Wie insbesondere die Fig.1 und 3 zeigen, sind die Gleitbahnen 30 in Umlaufrichtung des Bandes 25 in zwei Abschnitte 30',30'' unterteilt. Gegebenenfalls können auch mehr als zwei Abschnitte vorgesehen sein. Die einzelnen Abschnitte sind relativ zueinander verstellbar. Hiezu sind die einzelnen Abschnitte 30',30'' an ebenfalls voneinander getrennten Abschnitten 31',31'' der Wangen 31 befestigt. Die einzelnen Abschnitte 31',31'' der Wangen sind mittels Schlitzführungen 36 und dieser durchsetzender Bolzen 37 verstellbar. Zur Durchführung der Verstellbewegung dienen Exzenter 38, auf denen die Wangen 31' aufruhen. Die dadurch veränderte Spannung des Bandes 25 kann durch eine Verstellbarkeit einer oder mehrerer der Umlenkrollen 26 in Richtung des Pfeiles 39 (Fig.1) ausgeglichen werden. Zusätzlich hiezu ist der Wangenabschnitt 31' mit dem Wangenabschnitt 31'' durch ein Gelenk 40 mit horizontaler Achse schwenkbar verbunden, so daß die einlaufseitige Partie des Bandes 25 mehr oder weniger auf den Außenumfang der Außentrommel 2 zugestellt werden kann. Hiezu werden die Exzenter 38 verstellt, welche auf den unteren Wangenabschnitt 31'' wirken, der entsprechend seiner Schlitzführungen 36 relativ zu den Trommeln 2, verstellt wird. Dieser untere Wangenabschnitt 31'' nimmt über das Gelenk 40 den oberen Wangenabschnitt 31' mit, wobei letzterer Abschnitt 31' relativ zum unteren Wangenabschnitt 31'' eine Relativbewegung durchführt, welche vom Gelenk 40 und der Richtung der Schlitzführung 36 im Abschnitt 31' bestimmt wird. Zu beachten ist hiebei, daß die Richtung der (einzigen) Schlitzführung 36 im Abschnitt 31' nicht parallel ist zur Richtung der (zwei) Schlitzführungen 36 im Abschnitt 31''.

Auf diese Weise lassen sich die Form und die Größe des Spaltes 41 zwischen dem Band 25 und dem Außenumfang der Außentrommel 2 nach Wunsch einstellen. Beispielsweise Ausführungsformen dieses Spaltes 41 sind in den Fig.3 bis 6 dargestellt. Gemäß Fig.3 verringert sich die Dicke dieses Spaltes 41 kontinuierlich bis zu einer Stelle, welche etwa auf der Höhe der Welle 5 liegt. Von dort weg vergrößert sich die Dicke dieses Spaltes 41 wieder kontinuierlich, bis der Spalt am unteren Trommelscheitel seine größte Dicke erhält, so daß die Teigstücke dort problemlos auf das Band 25 abgelegt werden können. Dadurch wird zu Beginn der Schleifphase ein sich verstärkender Druck auf das Teigstück in der betreffenden Aufnahmeöffnung 11 ausgeübt, so daß eine gute Mitnahme des Teigstückes durch die Vertiefungen 10 der Innentrommel 3 gesichert ist. Sobald das Teigstück durch den Wirkvorgang beginnt, seine kugelige Form anzunehmen, vergrößert sich die in radialer Richtung der Trommeln 2,3 gemessene Stärke des Spaltes 41 wieder, was dem Umstand Rechnung trägt, daß das Teigstück in dieser Phase mehr Platz benötigt.

Bei der Gestalt des Spaltes 41 nach Fig.4 wird das Band 25 bis an den Außenumfang der Außentrommel 2 herangeführt. Dadurch wird eine besonders intensive Mitnahme des Teigstückes durch die Vertiefungen 10 zu Beginn des Schleifvorganges erzielt. Die in radialer Richtung gemessene Stärke des Spaltes 41 vergrößert sich sodann wieder bis auf einen bestimmten Wert (Dicke d, Fig.4), welcher Wert bis zur Ablagestelle 28 im wesentlichen konstant bleibt. Erst bei Erreichen der Ablagestelle 28 vergrößert sich die Spaltdicke 41 verhältnismäßig rasch auf einen wesentlich größeren Wert, um die Auslösung des Teigstückes aus der Aufnahmeöffnung 11 zu gewährleisten.

Bei der Ausführungsform nach Fig.5 sind die Verhältnisse ähnlich wie bei Fig.4, jedoch wird das Band 25 nicht in völlige Anlage an den Außenumfang der Außentrommel 2 herangeführt. Die Dicke des Spaltes 41 vergrößert sich sodann bis auf einen Wert, der über den restlichen Teil der Schleifphase im wesentlichen konstant bleibt, jedoch ist dieser Wert D (Fig.5) wesentlich größer als der Wert d nach Fig.4. Auch bei der Ausführungsform nach Fig.5 vergrößert sich die Spaltdicke an der Ablagestelle 28 wesentlich.

Bei der Ausführungsform nach Fig.6 bleibt die in radialer Richtung gemessene Dicke des Spaltes 41 über den Wirkbereich annähernd konstant und vergrößert sich erst an der Ablagestelle 28.

Es ist ersichtlich, daß auf diese Weise auch im Einlaufbereich des Bandes 25 eine Verstellung des Bandlaufes nach Wunsch erfolgen kann, um eine Anpassung des bei der Wirkung des Teigstückes auf dieses ausgeübten Druckes an verschiedene Teigstückgrößen und Teigarten (verschiedene Konsistenz des Teigstückes) zu erzielen. Die Ausbildung und Einhaltung auch verhältnismäßig komplizierter Spaltverläufe bzw. -gestalten (z.B. nach Fig.4,5) wird durch die Verwendung eines Bandes 25 wesentlich erleichtert, welches normal zu seiner Umlaufrichtung so steif ist, daß es in radialer Richtung weder durchhängen noch sich gegen die Außentrommel 2 zu ausbeulen kann.

Um ein Festkleben der Teigstücke am Band 25 zu vermeiden, ist eine Bestaubungseinrichtung 42 (Fig.1) vorgesehen, welche Mehl auf jene Seite des Bandes 25 aufbringt, die später mit den Teigstücken in Berührung kommt.

Auf die beschriebene Weise ist auch eine Anpassung an den jeweiligen Spaltverlauf zwischen Band 25 und Trommel 2 dann möglich, wenn der Durchmesser der Trommel 2 geändert wird, etwa in Anpassung an verschiedene Teigstückgewichte.

Bei der Variante nach Fig.8 ist das Band 25 wohl am Rande seiner Innenseite durch die Gleitbahnen 30′,30″ abgestützt, damit es sich nicht unmittelbar an die Außentrommel 2 anlegt. Ferner ist, ebenfalls in Übereinstimmung mit der Ausführungsform nach Fig.3, an der Außenseite des Bandes 25 eine Unterlage 32 in Form eines gebogenen Bleches angeordnet, welches eine Stütze für das Band 25 bildet. Diese Unterlage 32 ist bei der Ausführungsform nach Fig.8 jedoch nur in jenem Bereich vorgesehen, in welchem der Wirkvorgang des in der Aufnahmeöffnung 11 liegenden Teigstückes schon weit fortgeschritten bzw. schon im wesentlichen beendet ist, das ist etwa der Gleitbahnabschnitt 30″. In jenem Bereich, welcher etwa dem Gleitbahnabschnitt 30′ entspricht, in welchem der Wirkvorgang beginnt, entfällt jedoch die Unterlage 32, so daß das an sich etwas elastische Band 25 durch die Teigstücke geringfügig nach außen weggedrückt werden kann, was eine bessere Anschmiegung des Bandes 25 an das Teigstück gewährleistet. Diese Weglassung der eine Abstützung des Bandes 25 bildenden Unterlage 32 im Anfangsbereich des Wirkvorganges verbessert die Wirkergebnisse.

## Patentansprüche

1. Maschine zum Rundwirken von Teigstücken, mit einer in einem Gestell (1) gelagerten, mit Aufnahmeöffnungen (11) für die zu wirkenden Teigstücke versehenen Außentrommel (2), in der eine Innentrommel (3) angeordnet ist, die an ihrem Außenmantel den Aufnahmeöffnungen (11) zugeordnete Vertiefungen (10) trägt und durch einen Antrieb zu einer Kreisbewegung relativ zur Außentrommel (2) angetrieben ist, wobei beide Trommeln (2,3) zu einer Drehbewegung um ihre horizontalen Achsen angetrieben sind und die Teigstücke durch eine zumindest einen unteren Umfangsbereich der Außentrommel (2) begleitende Abstützung am Herausfallen aus den Aufnahmeöffnungen (11) verhindert sind, welche Abstützung ein endloses Band (25) aufweist, das mit einer der Umfangsgeschwindigkeit der Außentrommel (2) gleichen Geschwindigkeit umläuft und durch verstellbare Führungen (29) des Gestelles (1) zumindest über einen Teil des erwähnten Umfangsbereiches in einstellbarem Abstand vom Umfang der Außentrommel (2) geführt ist, dadurch gekennzeichnet, daß die Führungen (29) von Gleitbahnen (30) gebildet sind, welche nur an den beiden Seitenrändern des Bandes (25) angreifen, wobei die Gleitbahnen (30) das Band (25) auf dessen der Außentrommel (2) zugewandten Seite begleiten und dadurch das Band (25) in Abstand von der Außentrommel (2) halten und wobei zumindest in jenem Bereich, in welchem der Wirkorgang des Teigstückes schon weit fortgeschritten ist, an der Außenseite des Bandes (25) eine Unterlage (32) in Form eines gebogenen Bleches angeordnet ist, die eine Stütze für das Band (25) bildet.

2. Maschine nach Anspruch 1, dadurch gekennzeichnet, daß das Band (25) quer zu seiner Umlaufrichtung (Pfeil 27) steif ist.

3. Maschine nach Anspruch 1 oder 2, dadurch gekennzeichnet, daß die Gleitbahnen (30) von Blechstreifen gebildet sind, welche die Seitenränder des Bandes (25) an dessen der Außentrommel (2) zugewandten Seite übergreifen.

4. Maschine nach einem der Ansprüche 1,2 oder 3, dadurch gekennzeichnet, daß jede Gleitbahn (30) in Umlaufrichtung des Bandes (25) in zumindest zwei Abschnitte (30′, 30″) unterteilt ist, wobei die einzelnen Abschnitte relativ zueinander verstellbar sind.

5. Maschine nach Anspruch 4, dadurch gekennzeichnet, daß die einzelnen Abschnitte (30′, 30″) der Gleitbahnen (30) an Wangen (31) befestigt sind, die mittels Schlitzführungen auf die Außentrommel (2) zustellbar bzw. von dieser entfernbar sind.

6. Maschine nach Anspruch 4 oder 5, dadurch gekennzeichnet, daß zwei Abschnitte (30′,30″) der Gleitbahn (30) an ihren einander zugewendeten Enden durch ein Gelenk (40) mit horizontaler Achse miteinander verbunden und um diese Achse voneinander unabhängig schwenkbar gelagert sind, wobei diese Achse gegebenenfalls in ihrer Lage einstellbar ist.

7. Maschine nach einem der Ansprüche 1 bis 6, dadurch gekennzeichnet, daß auch im Einlaufbereich des Bandes (25) seitliche Führungen (29) für das Band (25) vorgesehen sind, mit denen der Abstand des Bandes (25) von der Außentrommel (2) in diesem Bereich verstellbar ist.

8. Maschine nach einem der Ansprüche 1 bis 7, dadurch gekennzeichnet, daß das Band (25) an seinen Seitenrändern Verdickungen (33), vorzugsweise mit Keilquerschnitt, aufweist, mit denen es in in Laufrichtung des Bandes verlaufenden Nuten (35) der Führungen (29) gehalten ist (Fig.7).

9. Maschine nach einem der Ansprüche 1 bis 8, dadurch gekennzeichnet, daß das Band (25) aus lebensmittelechtem steifen Kunststoff, vorzugsweise Polyamid, besteht, gegebenenfalls mit einer Baumwollbeschichtung.

10. Maschine nach einem der Ansprüche 1 bis 9, dadurch gekennzeichnet, daß das Band (25), vorzugsweise außerhalb des Wirkbereiches, zwischen den seitlichen Führungen (29) durch eine an seiner der Außentrommel (2) abgewendeten Außenseite anliegende Unterlage (32), z.B. ein gebogenes Blech, abgestützt ist.

## Claims

1. Device for balling pieces of dough, having an outer drum (2) mounted in a frame (1) and provided with receiving openings (11) for the pieces of dough to be worked, in which outer drum an inner drum (3) is arranged, which carries, on its outer casing, recesses (10) associated with the receiving openings (11) and is driven by a drive in a circular movement relative to the outer drum (2), whereby both drums (2,3) are driven in a rotary movement about their horizontal axes and the pieces of dough are prevented from falling out of the receiving openings (11) by a support accompanying at least a lower circumferential region of the outer drum (2), which support has an endless belt (25) which circulates at a speed equal to the circumferential speed of the outer drum (2) and is guided by adjustable guides (29) of the frame (1) at least over a part of the circumferential region mentioned at an adjustable distance from the circumference of the outer drum (2), characterized in that the guides (29) are formed by slides (30), which only engage on the two lateral edges of the belt (25), with the slides (30) accompanying the belt (25) on its side which faces the outer drum (2) and in this way holding the belt (25) at a distance from the outer drum (2) and with, at least in that region in which the working process of the piece of dough has already progressed to a great extent, a base (32) in the form of a bent sheet being arranged on the outer side of the belt (25), the base forming a support for the belt (25).

2. Device according to claim 1, characterized in that the belt (25) is rigid at right angles to its circumferential direction (arrow 27).

3. Device according to claim 1 or 2, characterized in that the slides (30) are formed from sheet-metal strips, which engage over the side edges of the belt (25) on its side which faces the outer drum (2).

4. Device according to one of claims 1, 2 or 3, characterized in that each slide (30) in the circumferential direction of the belt (25) is subdivided into at least two sections (30′,30″), whereby the individual sections can be adjusted relative to one another.

5. Device according to claim 4, characterized in that the individual sections (30′,30″) of the slides (30) are fastened to side walls (31), which can be delivered on to the outer drum (2) by means of slot guides or can be removed therefrom.

6. Device according to claim 4 or 5, characterized in that two sections (30′,30″) of the slide (30) are connected to one another at their ends which face one another by a hinge (40) with horizontal axis and are mounted in a pivotal manner about this axis independently of one another, with the position of this axis being optionally adjustable.

7. Device according to one of claims 1 to 6, characterized in that lateral guides (29) for the belt (25) are also provided in the inlet region of the belt (25), with which guides the distance of the belt (25) from the outer drum (2) in this region can be adjusted.

8. Device according to one of claims 1 to 7, characterized in that the belt (25) has thickenings (33) at its lateral edges, preferably with wedge cross section, with which the belt is held in grooves (35) of the guides (29), which grooves extend in the running direction of the belt (Figure 7).

9. Device according to one of claims 1 to 8, characterized in that the belt (25) consists of rigid plastics, preferably polyamide, which is resistant to food, optionally having a cotton covering.

10. Device according to one of claims 1 to 9, characterized in that the belt (25), preferably outside the working region, is supported between the lateral guides (29) by means of a base (32), for example a bent sheet, abutting its outer side which is directed away from the outer drum (2).

**Revendications**

1. Machine pour le boulage de pâtons, avec un tambour extérieur (2) logé dans un bâti (1) et muni d'ouvertures (11) pour recevoir les pâtons à bouler, tambour extérieur dans lequel est disposé un tambour intérieur (3), qui comporte sur son enveloppe extérieure des évidements (10) correspondant aux ouvertures (11) et qui est entraîné en rotation par rapport au tambour extérieur (2), les deux tambours (2, 3) étant entraînés en rotation autour de leurs axes horizontaux, et un support associé à au moins une zone périphérique inférieure du tambour extérieur (2) empêchant les pâtons de tomber des ouvertures (11), ce support présentant une bande sans fin (25) tournant à la même vitesse que la vitesse périphérique du tambour extérieur (2), et étant guidé par des guidages réglables (29) du bâti (1) au moins par l'intermédiaire d'une partie de la zone périphérique mentionnée, à une distance réglable de la périphérie du tambour extérieur (2), machine caractérisée en ce que les guidages (29) sont constitués par des glissières (30) exerçant leur action seulement sur les deux bords latéraux de la bande (25), les glissières (30) accompagnant la bande (25) sur le côté de celle-ci tourné vers le tambour extérieur (2), et maintenant donc la bande (25) à distance du tambour extérieur (2), et un support (32), en forme de tôle cintrée, formant un appui pour la bande (25), étant disposé sur le côté extérieur de la bande (25), au moins dans la zone dans laquelle l'opération de boulage du pâton est déjà bien avancée.

2. Machine suivant revendication 1, caractérisée en ce que la bande (25) est rigide dans un sens perpendiculaire à son sens de déplacement (flèche 27).

3. Machine suivant revendication 1 ou 2, caractérisée en ce que les glissières (30) sont constituées par des bandes de tôle qui recouvrent les bords latéraux de la bande (25) du côté de celle-ci tourné vers le tambour extérieur (2).

4. Machine suivant l'une des revendications 1, 2 ou 3, caractérisée en ce que chaque glissière (30) est divisée, dans le sens de déplacement de la bande (25), en au moins deux sections (30′, 30″), les sections individuelles étant réglables l'une par rapport à l'autre.

5. Machine suivant revendication 4, caractérisée en ce que les sections individuelles (30′, 30″) de la glissière (30) sont fixées sur des parois (31) qui peuvent être approchées du tambour extérieur (2) ou éloignées de celui-ci au moyen de trous allongés.

6. Machine suivant revendication 4 ou 5, caractérisée en ce que deux sections (30′, 30″) de la glissière (30) sont reliées entre elles, à leurs extrémités tournées l'une vers l'autre, par une articulation (40) avec un axe horizontal et sont montées de façon à pivoter autour de cet axe indépendamment l'une de l'autre, la position de cet axe étant réglable le cas échéant.

7. Machine suivant l'une des revendications 1 à 6, caractérisée en ce que des guidages latéraux (29) pour la bande (25) sont également prévus dans la zone d'entrée de la bande (25), avec lesquels la distance entre la bande (25) et le tambour extérieur (2) est réglable dans cette zone.

8. Machine suivant l'une des revendications 1 à 7, caractérisée en ce que la bande (25) présente sur ses bords latéraux des surépaisseurs (33), de préférence avec une section trapézoïdale, avec lesquelles elle est maintenue dans des gorges (35) des guidages (29), s'étendant dans le sens de déplacement de la bande (fig. 7).

9. Machine suivant l'une des revendications 1 à 8, caractérisée en ce que la bande (25) est composée d'une matière plastique rigide de qualité alimentaire, de préférence en polyamide, le cas échéant avec un revêtement de coton.

10. Machine suivant l'une des revendications 1 à 9, caractérisée en ce que la bande (25), de préférence en dehors de la zone de boulage, est soutenue entre les guidages latéraux (29) par un support (32), par exemple une tôle cintrée, situé sur le côté extérieur de la bande tourné à l'opposé du tambour extérieur (2).

EP 0 391 017 B1

FIG. 1

FIG. 2

9

FIG.3

FIG. 4

FIG. 5

FIG. 6

FIG. 7

FIG. 8